# EUROPEAN PATENT APPLICATION

(11) **EP 4 332 706 A1**
(43) Date of publication of application: **06.03.2024**
(21) Application number: 22795447.6
(22) Date of filing: 28.03.2022
(51) Int. Cl.: G05B 23/02, B60T 17/22, G01M 13/00, G01M 13/021, G01M 13/023, F16H 61/02

(54) **DIAGNOSIS SYSTEM**

(30) Priority: 26.04.2021 JP 2021073845
(71) Applicant: Nabtesco Corporation, Tokyo 102-0093 (JP); Kyokko Electric Co., Ltd., Kobe-shi Hyogo, 652-0032 (JP)
(72) Inventor: WADA Takashi, Kobe-shi Hyogo 652-0032 (JP); ANDOH Kiyoshi, Tokyo 102-0093 (JP); SHIRATA Takuya, Tokyo 102-0093 (JP)
(74) Representative: Grünecker Patent- und Rechtsanwälte PartG mbB
(86) International application number: PCT/JP2022/014951
(87) International publication number: WO 2022/230530

(57) **Abstract**

A diagnostic system 10 includes: a first sensor apparatus 20a installed on the upstream side of a pipe 12 as a power transmission path; a second sensor apparatus 20b installed on the downstream side of the pipe 12; and a diagnostic apparatus 22. The diagnostic apparatus 22 acquires a detection result of the first sensor apparatus 20a and a detection result of the second sensor apparatus 20b. The diagnostic apparatus 22 estimates the state of the pipe 12 between the first sensor apparatus 20a and the second sensor apparatus 20b based on the detection result of the first sensor apparatus 20a and the detection result of the second sensor apparatus 20b.

## Description

### [TECHNICAL FIELD]

The present invention relates to data processing technologies and particularly to diagnostic systems.

### [BACKGROUND ART]

A technology adapted to machine tools is proposed that estimates the temperature of a turret (tool installation rotary table) on which a temperature sensor is not installed and that corrects the blade position using information on discharge/stop of the coolant and measurement results of temperature sensors installed in various parts of the machine tool (see, for example, patent literature 1).

[Patent Literature 1] JP 2018-103274

### [SUMMARY OF INVENTION]

### [TECHNICAL PROBLEM]

The technology described in patent literature 1 estimates the temperature of a location where a sensor is not installed by using a theoretical formula related to heat conduction, and it is difficult to apply the technology to diagnosis of the state of a power transmission path.

The present invention has been made based on our recognition of the issue described above, and a purpose thereof is to provide a technology for efficiently diagnosing the state of a power transmission path.

### [SOLUTION TO PROBLEM]

A diagnostic system according to an aspect of the present invention includes: a sensor data acquisition unit that acquires a detection result of a first sensor installed on the upstream side of a power transmission path and a detection result of a second sensor installed on the downstream side of the power transmission path; and an estimation unit that estimates a state of the power transmission path between the first sensor and the second sensor based on the detection result of the first sensor and the detection result of the second sensor.

Optional combinations of the aforementioned constituting elements, and implementations of the present invention in the form of apparatuses, methods, computer programs, and recording mediums recording computer programs may also be practiced as additional modes of the present invention.

### [ADVANTAGEOUS EFFECTS OF INVENTION]

According to the present invention, the state of a power transmission path can be diagnosed efficiently.

### [BRIEF DESCRIPTION OF DRAWINGS]

Fig. 1 shows a configuration of a diagnostic system of the first exemplary embodiment;
Fig. 2 is a block diagram showing functional blocks of the sensor apparatus of the first exemplary embodiment;
Fig. 3 is a block diagram showing functional blocks of the diagnostic apparatus of the first exemplary embodiment;
Fig. 4 shows a configuration of the diagnostic system of the second exemplary embodiment;
Fig. 5 is a block diagram showing functional blocks of the diagnostic apparatus of the second exemplary embodiment;
Fig. 6 is a block diagram showing functional blocks of the diagnostic apparatus of the variation;
Fig. 7 shows a configuration of the diagnostic system of the third exemplary embodiment;
Fig. 8 shows a configuration of the diagnostic system of the fourth exemplary embodiment;
Fig. 9 shows a configuration of the diagnostic system of the fifth exemplary embodiment;
Fig. 10 is a block diagram illustrating functional blocks of the diagnostic apparatus of the fifth exemplary embodiment;
Fig. 11 shows a configuration of the diagnostic system of the sixth exemplary embodiment;
Fig. 12 is a block diagram showing functional blocks of the diagnostic apparatus of the sixth exemplary embodiment;
Fig. 13 shows a configuration of the diagnostic system of the seventh exemplary embodiment;
Fig. 14 shows a configuration of the diagnostic system of the eighth exemplary embodiment; and
Fig. 15 shows a configuration of the diagnostic system of the ninth exemplary embodiment.

### [DESCRIPTION OF EMBODIMENTS]

An outline of an exemplary embodiment will be described. Power transmission systems that use hydraulic pressure, pneumatic pressure, electric power, etc. are regularly checked for pipe leaks, filter deterioration, belt deterioration, etc. at intervals of six months, etc. In the past, the output of the power transmission system has been monitored, and an alert has been raised if there is an abnormality in the output. However, determination of a part of the power transmission system that is abnormal has required teardown inspection by a skilled engineer and has incurred much cost. In the following exemplary embodiments, a technology is proposed for efficiently diagnosing an abnormality in a power transmission path by estimating the state of the power transmission path between sensors, based on the detection results of the sensors installed on the upstream and downstream sides of the power transmission path, respectively.

### <First exemplary embodiment>

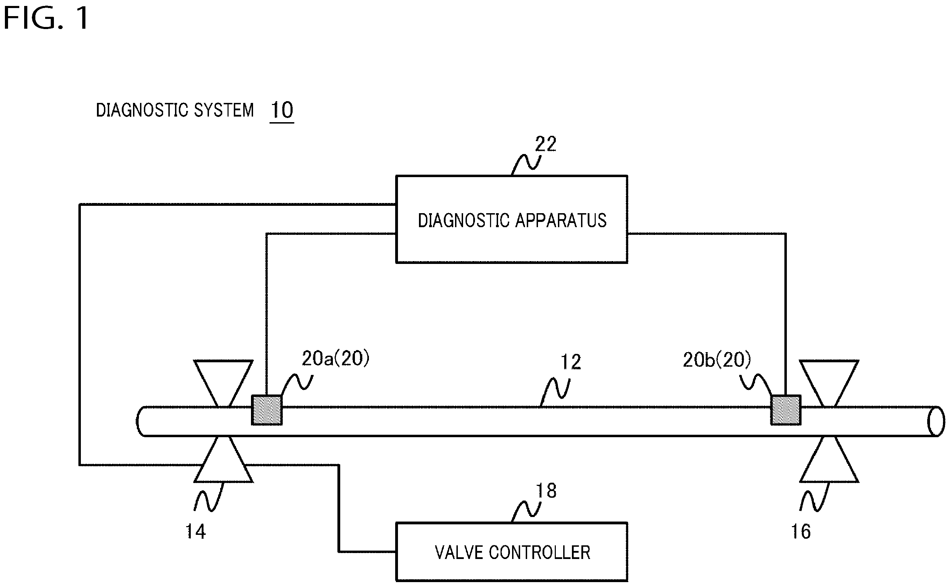

Fig. 1 shows a configuration of a diagnostic system 10 of the first exemplary embodiment. The diagnostic system 10 diagnoses the state of a power transmission system in an equipment. The diagnostic system 10 of the first exemplary embodiment and the other exemplary embodiments is a parasystem constructed independently of the power transmission system in the equipment and can be added later to the existing power transmission system.

The power transmission system of Fig. 1 includes a pipe 12, a valve 14, an actuator 16, and a valve controller 18. The pipe 12 is a power transmission path through which a fluid as a power transmission medium, controlled by the upstream valve 14, flows. The fluid may be any of various liquids or gases, and may be, for example, a hydraulic oil or a compressed air. The valve 14 is an electromagnetic valve controlled to open or close in order to regulate the flow rate and the pressure of the fluid flowing in the pipe 12.

The actuator 16 is installed on the downstream side of the pipe 12. The actuator 16 is a mechanical element that operates on the power transmitted by the power transmission path. In the first exemplary embodiment, the actuator 16 is a mechanical element driven by the pressure of the fluid transmitted from the valve 14 via the pipe 12. The valve controller 18 transmits a control signal to the valve 14 to control opening and closing of the valve 14 in accordance with an operation mode to be effected by the actuator 16, thereby controlling the pressure of the fluid transmitted via the pipe 12.

The diagnostic system 10 includes a first sensor apparatus 20a, a second sensor apparatus 20b, and a diagnostic apparatus 22. The first sensor apparatus 20a is a sensor apparatus installed upstream in the pipe 12 as the power transmission path. The first sensor apparatus 20a of the first exemplary embodiment is installed on the surface of the pipe 12 in the vicinity of the valve 14. The second sensor apparatus 20b is a sensor installed downstream in the pipe 12 as the power transmission path. The second sensor apparatus 20b of the first exemplary embodiment is installed on the surface of the pipe 12 in the vicinity of the actuator 16. When the first sensor apparatus 20a and the second sensor apparatus 20b are collectively referred to, they are referred to as "sensor apparatuses 20".

The diagnostic apparatus 22 is an information processing apparatus connected to the first sensor apparatus 20a and the second sensor apparatus 20b via a wireless communication network and a wired communication network composed of an access point, a switch, a router, etc. (not shown). The diagnostic apparatus 22 estimates the state of the pipe 12 based on the detection result of the first sensor apparatus 20a and the detection result of the second sensor apparatus 20b.

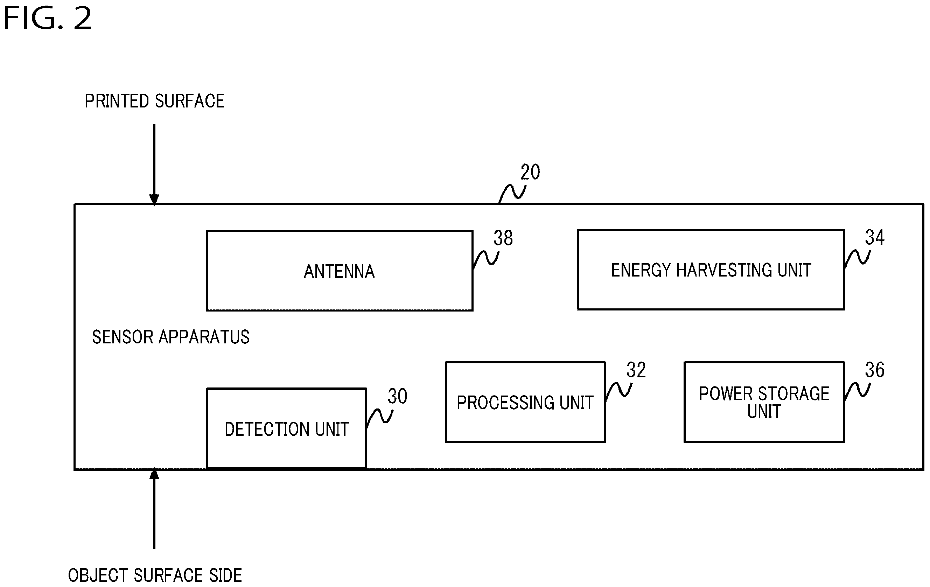

Fig. 2 is a block diagram showing functional blocks of the sensor apparatus 20 of the first exemplary embodiment. The figure shows exemplary functional blocks provided in the sensor apparatus 20 of the first exemplary embodiment. The blocks depicted in the block diagrams of this specification are implemented in hardware by devices/electronic circuits/mechanical apparatuses exemplified by a processor, a CPU, and a memory of a computer, and in software by a computer program, etc. Fig. 2 depicts functional blocks implemented by the cooperation of these elements. Therefore, it will be understood by those skilled in the art that the functional blocks may be implemented in a variety of manners by a combination of hardware and software.

The sensor apparatus 20 is attached as a nameplate to the surface of an article having a predetermined physical structure (hereinafter also referred to as an "object"). The object may be any of various types of electronic equipment, electrical equipment, mechanical apparatuses, parts, or finished products. The object of the first exemplary embodiment is the pipe 12 as the power transmission path. The sensor apparatus 20 includes a detection unit 30, a processing unit 32, an energy harvesting unit 34, a power storage unit 36, and an antenna 38.

The sensor apparatus 20 as a nameplate displays various information related to the object on the outer surface (the printed surface of Fig. 2). Further, members corresponding to the functional blocks shown in Fig. 2 are integrally provided in a sheet shape in the sensor apparatus 20. The sheet shape means that the length of the sensor apparatus 20 in the thickness direction is shorter than either the vertical length or the horizontal length of the sensor apparatus 20. Given, for example, that the vertical length and horizontal length of the sensor apparatus 20 are several centimeters, the length of the sensor apparatus 20 in the thickness direction is 5 millimeters or less. Preferably, the length of the sensor apparatus 20 in the thickness direction is 1 millimeter or less.

The detection unit 30 is provided in contact with or in proximity to the object to measure the state (which can be said to be a physical quantity) related to the object. The detection unit 30 of the first sensor apparatus 20a measures a physical state related to the position of installation of the first sensor apparatus 20a in the pipe 12, that is, the position in the pipe 12 in the vicinity of the valve 14. The detection unit 30 of the second sensor apparatus 20b measures a physical state related to the position of installation of the second sensor apparatus 20b in the pipe 12, that is, the position in the pipe 12 in the vicinity of the actuator 16. In the first exemplary embodiment, the detection unit 30 measures a vibration at the position of sensor installation (which can be said to be the location of sensor installation). The detection unit 30 outputs a signal (also referred to as a "detection signal") based on the measurement result (detection result) to the processing unit 32.

The state related to the object measured by the detection unit 30 may be either one or both of the state of the object itself (the state of either the interior or the surface of the object or both) and the state around the object (i.e., the environment surrounding the object). Further, the state related to the object may be one type of physical state or physical quantity or a combination of a plurality of types of physical states or physical quantities. For example, the state related to the object may be vibration (e.g., 3-axis acceleration) and/or temperature. Further, the state related to the object may be the velocity and/or pressure of a fluid in the pipe 12, which may be measured based on the reflected intensity of ultrasonic waves or radio waves.

The processing unit 32 generates information (also referred to as "sensor data" hereinafter) output from antenna 38, based on the measurement result of the detection unit 30 and, in this exemplary embodiment, the detection signal output from the detection unit 30. The processing unit 32 may execute a predetermined calculation (for example, various filter processes, abnormality diagnostic processes implemented by artificial intelligence functions, etc.) based on the detection signal output from the detection unit 30 and may generate sensor data including the calculation result.

The antenna 38 as an output unit outputs data based on the measurement result of the detection unit 30 and, in the embodiment, outputs the sensor data generated by the processing unit 32 outside. The antenna 38 as a communication unit may transmit the sensor data to an external apparatus by using Wi-Fi (registered trademark), BLE (Bluetooth Low Energy (registered trademark)), NFC (Near Field Communication), etc. In the embodiment, the sensor data transmitted from the antenna 38 of the sensor apparatus 20 is transmitted to the diagnostic apparatus 22 via a wireless communication network and a wired communication network.

The energy harvesting unit 34 converts energy existing in the environment surrounding the sensor apparatus 20 into electric power (so-called energy harvesting) and supplies the generated electric power as the electric power for operating each functional block of the sensor apparatus 20. The energy harvesting unit 34 may perform known energy harvesting based on at least one type of energy including temperature, humidity, radio waves such as Wi-Fi, electromagnetic waves from around the sensor apparatus 20 (including radioactive rays and cosmic rays and also including electromagnetic noise emitted from electric motors, etc.), vibration, sound (including ultrasonic waves), light (including visible light, infrared light, and ultraviolet light), and the flow of a fluid or powders (wind, waves, etc.). The antenna 38 may include the function of the energy harvesting unit 34, in which case the antenna 38 may execute data communication and energy harvesting in a time-division manner.

The power storage unit 36 stores the electricity generated by the energy harvesting unit 34 and supplies the stored electric power as the electric power for operating each functional block of the sensor apparatus 20. In the embodiment, the detection unit 30, the processing unit 32, and the antenna 38 of the sensor apparatus 20 can operate based on the power supplied from the energy harvesting unit 34 and can also operate on the electric power supplied from the power storage unit 36. The power storage unit 36 may be a capacitor (including an electric double layer capacitor) or a secondary battery (for example, a lithium ion battery, a solid lithium ion battery, an air battery).

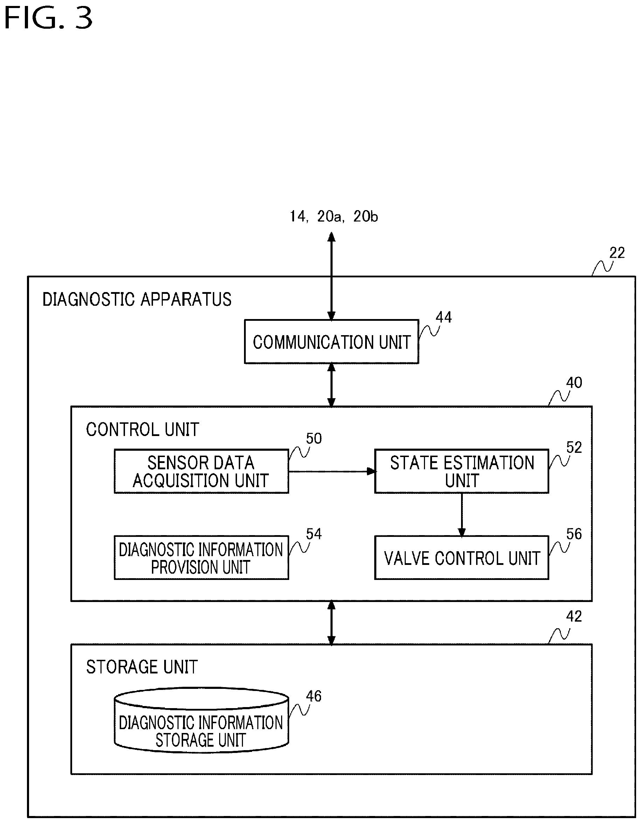

Fig. 3 is a block diagram showing functional blocks of the diagnostic apparatus 22 of the first exemplary embodiment. The diagnostic apparatus 22 includes a control unit 40, a storage unit 42, and a communication unit 44. The control unit 40 executes various data processes related to diagnosis of the power transmission path. The storage unit 42 stores data referenced or updated by the control unit 40. The communication unit 44 communicates with the external apparatus according to a predetermined communication protocol. In the first exemplary embodiment, the control unit 40 transmits/receives data to or from the valve 14, the first sensor apparatus 20a, and the second sensor apparatus 20b via the communication unit 44.

The storage unit 42 includes a diagnostic information storage unit 46. The diagnostic information storage unit 46 stores diagnostic information indicating an estimated result related to the state of the power transmission path (the pipe 12 in the first exemplary embodiment). The diagnostic information includes information as a diagnosis result indicating the state of the pipe 12 and information indicating the position of the pipe 12 diagnosed. The information indicating the state of the pipe 12 may be information indicating normality or abnormality. The information indicating the position of the pipe 12 diagnosed may be information indicating a position identified by the combination of the first sensor apparatus 20a and the second sensor apparatus 20b or information indicating the set of the first sensor apparatus 20a and the second sensor apparatus 20b.

The control unit 40 includes a sensor data acquisition unit 50, a state estimation unit 52, a diagnostic information provision unit 54, and a valve control unit 56. A computer program in which the functions of these plurality of function blocks are implemented may be stored in a predetermined recording medium or may be installed in the storage of the diagnostic apparatus 22 via the recording medium. Further, the computer program may be downloaded via a communication network and installed in the storage of the diagnostic apparatus 22. The CPU of the diagnostic apparatus 22 may exhibit the function of each function block by reading the computer program into the main memory and executing the computer program.

The sensor data acquisition unit 50 acquires first sensor data related to the detection result of the first sensor apparatus 20a transmitted from the first sensor apparatus 20a. Further, the sensor data acquisition unit 50 acquires second sensor data related to the detection result of the second sensor apparatus 20b transmitted from the second sensor apparatus 20b. The first sensor data of the first exemplary embodiment indicates the magnitude (in other words, the amplitude) of the vibration at the position of installation of the first sensor apparatus 20a. The second sensor data of the first exemplary embodiment indicates the magnitude (in other words, the amplitude) of the vibration at the position of installation of the second sensor apparatus 20b.

The state estimation unit 52 estimates the state of the power transmission path (the pipe 12 in the first exemplary embodiment) between the first sensor apparatus 20a and the second sensor apparatus 20b based on the first sensor data and the second sensor data acquired by the sensor data acquisition unit 50.

In the first exemplary embodiment, the state estimation unit 52 identifies the magnitude of vibration at the position of installation of the first sensor apparatus 20a based on the first sensor data. Further, the state estimation unit 52 identifies the magnitude of vibration at the position of installation of the second sensor apparatus 20b based on the second sensor data.

When the vibration at the position of installation of the second sensor apparatus 20b is smaller than the vibration at the position of installation of the first sensor apparatus 20a, the state estimation unit 52 estimates that there is an abnormality in the pipe 12 between the first sensor apparatus 20a and the second sensor apparatus 20b. Specifically, the state estimation unit 52 estimates that there is a clog or a leak in the pipe 12 (typically inside the pipe 12) between the first sensor apparatus 20a and the second sensor apparatus 20b. This is because, when there is a clog or a leak in the pipe 12 between the first sensor apparatus 20a and the second sensor apparatus 20b, the flow rate of the fluid in the pipe 12 corresponding to the position of installation of the second sensor apparatus 20b will be smaller than the flow rate of the fluid in the pipe 12 corresponding to the position of installation of the first sensor apparatus 20a, and, as a result, the vibration at the position of installation of the second sensor apparatus 20b will be smaller than the vibration at the position of installation of the first sensor apparatus 20a.

The state estimation unit 52 may estimate that there is a clog or a leak in the pipe 12 between the first sensor apparatus 20a and the second sensor apparatus 20b when the vibration at the position of installation of the second sensor apparatus 20b is smaller than the vibration at the position of installation of the first sensor apparatus 20a and when the difference between the magnitude of vibration at the position of installation of the first sensor apparatus 20a and the magnitude of vibration at the position of installation of the second sensor apparatus 20b is equal to or greater than a predetermined threshold value. An appropriate threshold value may be determined by the knowledge of the developer of the diagnostic system 10 or experiments using the diagnostic system 10 (e.g., experiments using the cloggy or leaky pipe 12 and the pipe 12 that is not leaky or cloggy, respectively).

The state estimation unit 52 stores diagnostic information including a result of estimation of the state of the power transmission path (the pipe 12 in the first exemplary embodiment) and a date and time of estimation in the diagnostic information storage unit 46. When the state estimation unit 52 estimates that there is a clog or a leak in the pipe 12 between the first sensor apparatus 20a and the second sensor apparatus 20b, for example, the state estimation unit 52 may store diagnostic information including a content showing the fact in the diagnostic information storage unit 46. The diagnostic information provision unit 54 transmits the diagnostic information stored in the diagnostic information storage unit 46 to an external apparatus not shown (for example, the terminal of a maintenance operator) as a response to a request from outside or periodically.

The valve control unit 56 transmits a control signal for controlling opening/closing of the valve 14 to the valve 14 according to the result of estimation by the state estimation unit 52. In the first exemplary embodiment, the valve control unit 56 increases the flow rate and the pressure of the fluid in the pipe 12 by controlling the valve 14 to a more open position, when it is estimated by the state estimation unit 52 that there is a clog or a leak in the pipe 12. For example, the valve control unit 56 may control the valve 14 to a position more open than the when it was estimated that there is a clog or a leak in the pipe 12. Alternatively, the valve control unit 56 may change the position of the valve 14 by a preset set value or larger or may change the position of the valve 14 to the maximum value that can be set.

The operation of the diagnostic system 10 according to the above configuration will be described. The detection unit 30 of the first sensor apparatus 20a periodically detects the vibration at the position of sensor installation in the pipe 12. The antenna 38 of the first sensor apparatus 20a transmits the first sensor data indicating the result of detection by the detection unit 30 to the diagnostic apparatus 22. In parallel with this, the detection unit 30 of the second sensor apparatus 20b periodically detects the vibration at the position of sensor installation in the pipe 12. The antenna 38 of the second sensor apparatus 20b transmits the second sensor data indicating the result of detection by the detection unit 30 to the diagnostic apparatus 22.

The sensor data acquisition unit 50 of the diagnostic apparatus 22 acquires the first sensor data transmitted from the first sensor apparatus 20a and the second sensor data transmitted from the second sensor apparatus 20b. The state estimation unit 52 of the diagnostic apparatus 22 compares the vibration value indicated by the first sensor data and the vibration value indicated by the second sensor data and estimates the status of the pipe 12 (whether the pipe 12 is abnormal or not) between the first sensor apparatus 20a and the second sensor apparatus 20b. The valve control unit 56 of the diagnostic apparatus 22 controls opening/closing of the valve 14 according to the state of the pipe 12 between the first sensor apparatus 20a and the second sensor apparatus 20b. The diagnostic information provision unit 54 of the diagnostic apparatus 22 provides diagnostic information indicating the state of the pipe 12 between the first sensor apparatus 20a and the second sensor apparatus 20b to the external apparatus.

According to the diagnostic system 10 of the first exemplary embodiment, it is possible to know whether there is an abnormality, etc. equally at a location on the power transmission path where a sensor is not installed and to diagnose the state of the power transmission path efficiently. In further accordance with the diagnostic system 10, it is possible to eliminate a clog in the pipe 12 as the power transmission path and to reduce an impact from a leak in the pipe 12.

### Variation 1-1:

A variation related to the first exemplary embodiment will be described. The first sensor apparatus 20a and the second sensor apparatus 20b of the first exemplary embodiment each detects a vibration at the position of sensor installation. In one variation, the first sensor apparatus 20a and the second sensor apparatus 20b may each detect a temperature at the position of sensor installation (for example, the surface temperature of the pipe 12) instead of or in addition to a vibration.

Given, as a basis of the discussion, that the temperature of the fluid inside the pipe 12 is higher than the temperature around the pipe 12, the state estimation unit 52 of the diagnostic apparatus 22 may estimate that there is an abnormality in the pipe 12 between the first sensor apparatus 20a and the second sensor apparatus 20b, and, specifically, the state estimation unit 52 may estimate that there is a clog or a leak in the pipe 12 between the first sensor apparatus 20a and the second sensor apparatus 20b, when the temperature at the position of installation of the second sensor apparatus 20b is lower than the temperature at the position of installation of the first sensor apparatus 20a. This is because, when there is a clog or a leak in the pipe 12 between the first sensor apparatus 20a and the second sensor apparatus 20b, the pressure of the fluid in the pipe 12 corresponding to the position of installation of the second sensor apparatus 20b becomes smaller than the pressure of the fluid in the pipe 12 corresponding to the position of installation of the first sensor apparatus 20a, and, as a result, the temperature at the position of installation of the second sensor apparatus 20b becomes lower than the temperature at the position of installation of the first sensor apparatus 20a.

The state estimation unit 52 may estimate that there is a clog or a leak in the pipe 12 between the first sensor apparatus 20a and the second sensor apparatus 20b when the temperature at the position of installation of the second sensor apparatus 20b is lower than the temperature at the position of installation of the first sensor apparatus 20a and when the temperature difference between the positions of installation of the respective sensors is equal to or greater than a predetermined threshold value.

### Variation 1-2:

Another variation related to the first variation will be described. Each of the first sensor apparatus 20a and the second sensor apparatus 20b may detect at least one of the velocity of the fluid flowing in the pipe 12 at the position of sensor installation or the pressure of the fluid flowing in the pipe 12 at the position of sensor installation.

For example, the detection unit 30 of the first sensor apparatus 20a and the detection unit 30 of the second sensor apparatus 20b may be sensors that irradiate the fluid in the pipe 12 with ultrasonic waves or radio waves and measure the intensity of ultrasonic waves or radio waves reflected by the fluid. The processing unit 32 of the first sensor apparatus 20a and the processing unit 32 of the second sensor apparatus 20b may use a known method to derive at least one of the velocity or the pressure of the fluid in the pipe 12, based on the reflection intensity measured by the detection unit 30.

The state estimation unit 52 of the diagnostic apparatus 22 may estimate the state inside the pipe 12 by comparing the velocity of the fluid at the position of installation of the first sensor apparatus 20a obtained from the detection result of the first sensor apparatus 20a (i.e. the velocity of the fluid indicated by the first sensor data) with the velocity of the fluid at the location of installation of the second sensor apparatus 20b obtained from the detection result of the second sensor apparatus 20b (i.e. the velocity of the fluid indicated by the second sensor data). For example, the state estimation unit 52 may estimate that there is a clog or a leak in the pipe 12 between the first sensor apparatus 20a and the second sensor apparatus 20b when the velocity of the fluid indicated by the second sensor data is smaller than the velocity of the fluid indicated by the first sensor data.

Similarly, the state estimation unit 52 of the diagnostic apparatus 22 may estimate the state inside the pipe 12 by comparing the pressure value of the fluid at the location of installation of the first sensor apparatus 20a obtained from the detection result of the first sensor apparatus 20a with the pressure value of the fluid at the location of installation of the second sensor apparatus 20b obtained from the detection result of the second sensor apparatus 20b. When the pressure value of the fluid indicated by the second sensor data is smaller than the pressure value of the fluid indicated by the first sensor data, for example, the state estimation unit 52 may estimate that there is a clog or a leak in the pipe 12 between the first sensor apparatus 20a and the second sensor apparatus 20b.

### Variation 1-3:

Yet another variation related to the first exemplary embodiment will be described. The detection unit 30 of the first sensor apparatus 20a and the detection unit 30 of the second sensor apparatus 20b may detect a vibration at the position of sensor installation. When the difference between the value of vibration at the position of installation of the first sensor apparatus 20a obtained from the detection result of the first sensor apparatus 20a and the value of vibration at the position of installation of the second sensor apparatus 20b obtained from the detection result of the second sensor apparatus 20b is within a predetermined range, the state estimation unit 52 of the diagnostic apparatus 22 may estimate that a vibration is occurring in the entirety of the pipe 12 as the power transmission path.

In this case, even when it is estimated that the state of the pipe 12 between the first sensor apparatus 20a and the second sensor apparatus 20b is abnormal based on at least one of the value of vibration indicated by the detection result of the first sensor apparatus 20a or the value of vibration indicated by the detection result of the second sensor apparatus 20b, the state estimation unit 52 may estimate that the state of the pipe 12 between the first sensor apparatus 20a and the second sensor apparatus 20b is normal when it is estimated that a vibration is occurring in the entirety of the entire pipe 12. That is, the estimation result of the state of the pipe 12 between the first sensor apparatus 20a and the second sensor apparatus 20b may be altered by allowing for the vibration occurring in the entirety of the pipe 12. According to this variation, false detection of an abnormality in the power transmission path can be avoided, in other words, the estimation accuracy of the state of the power transmission path can be improved.

### <Second exemplary embodiment>

The second exemplary embodiment of the present invention will be described mainly highlighting differences from the exemplary embodiment described above, and a description of common features will be omitted as appropriate. The features of the second exemplary embodiment can of course be combined with features of the exemplary embodiment and variations described above as desired. Of the components of the second exemplary embodiment, those components that are the same as or correspond to the components of the exemplary embodiment described above will be described by denoting them with the same reference numerals as appropriate.

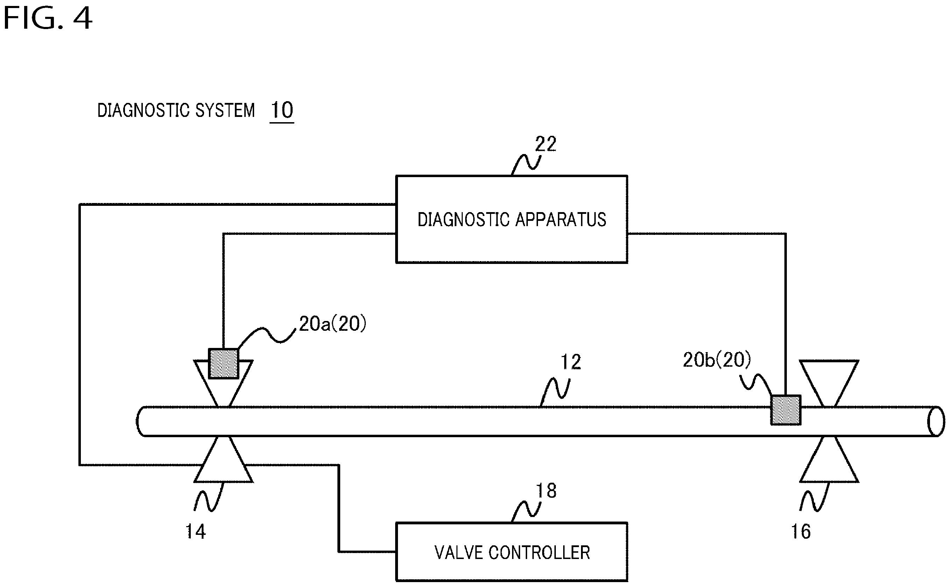

Fig. 4 shows a configuration of the diagnostic system 10 of the second exemplary embodiment. The diagnostic system 10 of the second exemplary embodiment differs from the diagnostic system 10 of the first exemplary embodiment in that the first sensor apparatus 20a installed on the upstream side of the power transmission path is installed in the valve 14 instead of the pipe 12.

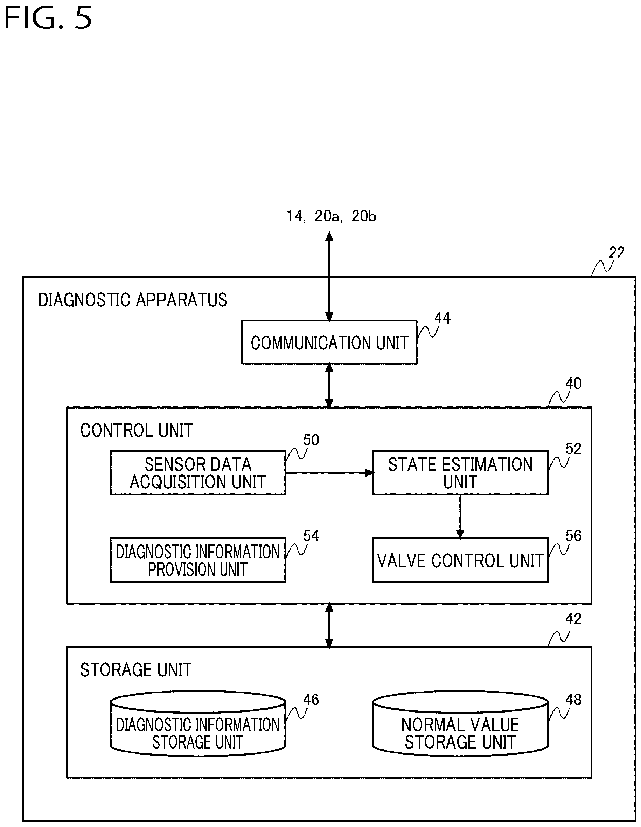

Fig. 5 is a block diagram showing functional blocks of the diagnostic apparatus 22 of the second exemplary embodiment. The diagnostic apparatus 22 of the second exemplary embodiment further includes a normal value storage unit 48 in addition to the functional blocks of the diagnostic apparatus 22 of the first exemplary embodiment.

The normal value storage unit 48 stores a normal value of the detection result of the second sensor apparatus 20b occurring when the valve 14 is in an open state or a closed state. In the second exemplary embodiment, the first sensor apparatus 20a and the second sensor apparatus 20b each detects a vibration at the position of sensor installation. In the second exemplary embodiment, therefore, the normal value storage unit 48 stores a vibration value as a normal value of the detection result of the second sensor apparatus 20b occurring when the valve 14 is in an open state. The value of vibration as a normal value may be a normal range of at least one of amplitude or frequency of the vibration. As also described in the first exemplary embodiment and its variations, each of the first sensor apparatus 20a and the second sensor apparatus 20b may detect a physical quantity other than vibration. The normal value storage unit 48 stores a normal value relevant to the type of physical quantity detected by the first sensor apparatus 20a and the second sensor apparatus 20b.

The state estimation unit 52 estimates whether or not the valve 14 is in an open state based on the detection result (first sensor data) of the first sensor apparatus 20a. For example, the storage unit 42 may store a value of vibration (for example, a range of at least one of amplitude or frequency) at the position of installation of the first sensor apparatus 20a occurring when the valve 14 is in the open state. The state estimation unit 52 may estimate that the valve 14 is in an open state when the value of vibration indicated by the detection result of the first sensor apparatus 20a is consistent with the value of vibration at the installation position of the first sensor apparatus 20a occurring when the valve 14 is in an open state, which is stored in the storage unit 42.

When the valve 14 is estimated to be in an open state, the state estimation unit 52 estimates the state of the pipe 12 between the first sensor apparatus 20a and the second sensor apparatus 20b by comparing the value of the detected result of the second sensor apparatus 20b (second sensor data) with the normal value stored in the normal value storage unit 48. The state estimation unit 52 may estimate that the state of the pipe 12 is normal when the vibration value indicated by the detection result of the second sensor apparatus 20b is consistent with the normal value stored in the normal value storage unit 48. The state estimation unit 52 may estimate that the state of the pipe 12 is abnormal when the vibration value indicated by the detection result of the second sensor apparatus 20b is inconsistent with the normal value stored in the normal value storage unit 48.

Further, the normal value storage unit 48 may store, as a normal value, the detection result of the second sensor apparatus 20b occurring when there are no clogs or leaks in the pipe 12 between the first sensor apparatus 20a and the second sensor apparatus 20b. When the vibration value indicated by the detection result of the second sensor apparatus 20b is inconsistent with the normal value stored in the normal value storage unit 48, the state estimation unit 52 may estimate that there is a clog or a leak in the pipe 12 between the first sensor apparatus 20a and the second sensor apparatus 20b. When it is estimated that there is a clog or a leak in the pipe 12, the valve control unit 56 may control the valve 14 to be in a more open position as in the first exemplary embodiment.

In addition to providing the benefit of the diagnostic system 10 of the first exemplary embodiment, the diagnostic system 10 of the second exemplary embodiment can estimate whether there is an abnormality at a location on the power transmission path where a sensor is not installed more accurately.

### Variation 2-1:

A variation related to the second exemplary embodiment will be described. The normal value storage unit 48 may store a vibration value as a normal value of the detected result of the second sensor apparatus 20b occurring when the valve 14 is in a closed state, in addition to or instead of the vibration value as a normal value of the detected result of the second sensor apparatus 20b occurring when the valve 14 is in an open state.

The state estimation unit 52 estimates whether or not the valve 14 is in a closed state based on the detection result of the first sensor apparatus 20a (first sensor data). For example, the storage unit 42 stores a value of vibration (for example, a range of at least one of amplitude or frequency) at the position of installation of the first sensor apparatus 20a occurring when the valve 14 is in a closed state. The state estimation unit 52 may estimate that the valve 14 is in a closed state when the vibration value indicated by the detection result of the first sensor apparatus 20a is consistent with the value of vibration at the position of installation of the first sensor apparatus 20a occurring when the valve 14 is in a closed state, which is stored in the storage unit 42.

When the valve 14 is estimated to be in a closed state, the state estimation unit 52 estimates the state of the pipe 12 between the first sensor apparatus 20a and the second sensor apparatus 20b by comparing the value of the detection result of the second sensor apparatus 20b (second sensor data) with the normal value stored in the normal value storage unit 48. The state estimation unit 52 may estimate that the state of the pipe 12 is normal when the vibration value indicated by the detection result of the second sensor apparatus 20b is consistent with the normal value stored in the normal value storage unit 48. The state estimation unit 52 may estimate that the state of the pipe 12 is abnormal when the vibration value indicated by the detection result of the second sensor apparatus 20b is inconsistent with the normal value stored in the normal value storage unit 48. The diagnostic system 10 of this variation also provides the same benefit as the diagnostic system 10 of the second exemplary embodiment.

### Variation 2-2:

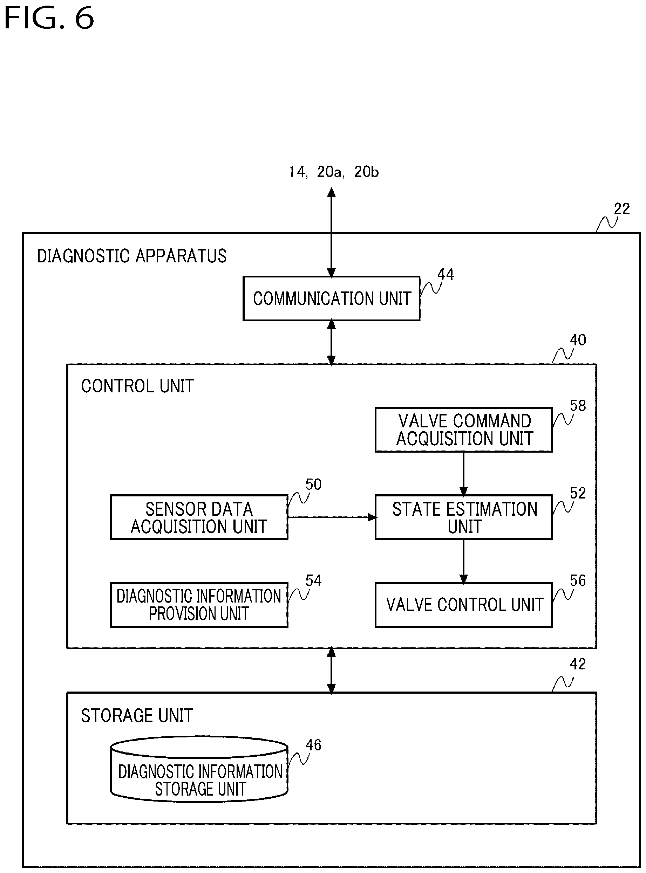

Another variation related to the second exemplary embodiment will be described. Fig. 6 is a block diagram showing functional blocks of the diagnostic apparatus 22 of the variation. The diagnostic apparatus 22 of the variation further includes a valve command acquisition unit 58 in addition to the functional blocks of the diagnostic apparatus 22 of the first exemplary embodiment.

The valve command acquisition unit 58 of the diagnostic apparatus 22 receives a valve operation command from the valve 14, the valve operation command being a control signal transmitted from the valve controller 18 to the valve 14 and being a control signal for opening or closing the valve 14. In one variation, the valve command acquisition unit 58 may acquire, from the valve controller 18, a pipe operation command transmitted from the valve controller 18 to the valve 14 or may acquire the command from a relay apparatus (not shown) that relays communication between the valve controller 18 and the valve 14.

The state estimation unit 52 of the diagnostic apparatus 22 estimates the state of the pipe 12 between the first sensor apparatus 20a and the second sensor apparatus 20b based on the detection result of the first sensor apparatus 20a and the detection result of the second sensor apparatus 20b in response to the acquisition of the valve operation command by the valve command acquisition unit 58, in other words, when the valve operation command is acquired. According to the diagnostic system 10 of this variation, the state of the pipe 12 is diagnosed at a point of time when the valve operation command is transmitted from the valve controller 18 to the valve 14. This makes it possible to detect an abnormality in the pipe 12 as the power transmission path accurately.

### <Third exemplary embodiment>

The third exemplary embodiment of the present invention will be described mainly highlighting differences from the exemplary embodiments described above, and a description of common features will be omitted as appropriate. The features of the third exemplary embodiment can of course be combined with features of the exemplary embodiments and variations described above as desired. Of the components of the third exemplary embodiment, those components that are the same as or correspond to the components of the exemplary embodiments described above will be described by denoting them with the same reference numerals as appropriate.

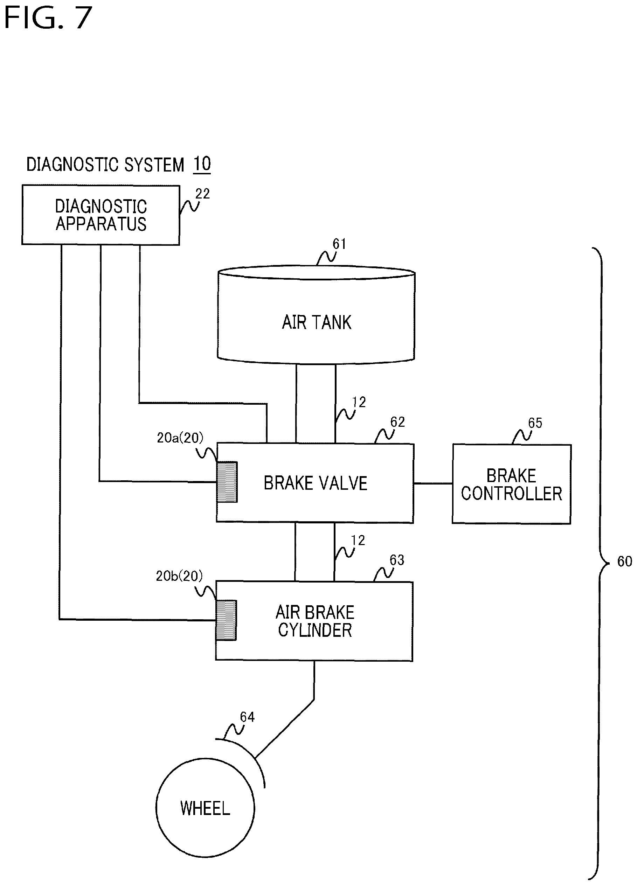

Fig. 7 shows a configuration of the diagnostic system 10 of the third exemplary embodiment. The diagnostic system 10 of the third exemplary embodiment diagnoses the state of a railway brake system 60 as a power transmission system of a railway vehicle. The railway brake system 60 includes a pipe 12, an air tank 61, a brake valve 62, an air brake cylinder 63, a brake wheel 64, and a brake controller 65.

The air tank 61 is filled with a compressed air and outputs the compressed air. The brake valve 62 is a valve installed on the upstream side of the pipe 12 as a power transmission path and regulating the flow rate of the compressed air flowing in the pipe 12. The air brake cylinder 63 is an actuator that operates by using the pressure of the compressed air transmitted from the brake valve 62 via the pipe 12 as the driving source. The brake wheel 64 is connected to the air brake cylinder 63. The brake controller 65 controls the operation of the air brake cylinder 63 and the brake wheel 64 by controlling opening/closing of the brake valve 62 and regulating the flow rate of the compressed air flowing in the pipe 12. Thereby, the brake controller 65 brakes the wheels of the railway vehicle.

The first sensor apparatus 20a is installed on the upstream side of the pipe 12 and is installed in the brake valve 62 in the third exemplary embodiment. The second sensor apparatus 20b is installed on the downstream side of the pipe 12 and is installed in the air brake cylinder 63 in the third exemplary embodiment.

The diagnostic apparatus 22 of the third exemplary embodiment communicates with the first sensor apparatus 20a, the second sensor apparatus 20b, and the brake valve 62. The diagnostic apparatus 22 of the third exemplary embodiment may include functional blocks provided in the diagnostic apparatus 22 of the exemplary embodiments or variations described above. For example, the diagnostic apparatus 22 of the third exemplary embodiment may include functional blocks of the diagnostic apparatus 22 of the first exemplary embodiment shown in Fig. 3.

The state estimation unit 52 of the diagnostic apparatus 22 estimates the state of the pipe 12 between the brake valve 62 and the air brake cylinder 63 based on the detection result of the first sensor apparatus 20a and the detection result of the second sensor apparatus 20b. The estimation method and the estimated content discussed in the exemplary embodiments or variations described above may be applied to the method of estimation and the content estimated by the state estimation unit 52. The diagnostic system 10 of the third exemplary embodiment provides the benefit corresponding to that of the diagnostic system 10 of the exemplary embodiments described above. For example, diagnostic system 10 of the third exemplary embodiment can diagnose the state of the power transmission path in the railway brake system 60 efficiently.

### <Fourth exemplary embodiment>

The fourth exemplary embodiment of the present invention will be described mainly highlighting differences from the exemplary embodiments described above, and a description of common features will be omitted as appropriate. The features of the fourth exemplary embodiment can of course be combined with features of the exemplary embodiments and variations described above as desired. Of the components of the fourth exemplary embodiment, those components that are the same as or correspond to the components of the exemplary embodiments described above will be described by denoting them with the same reference numerals as appropriate.

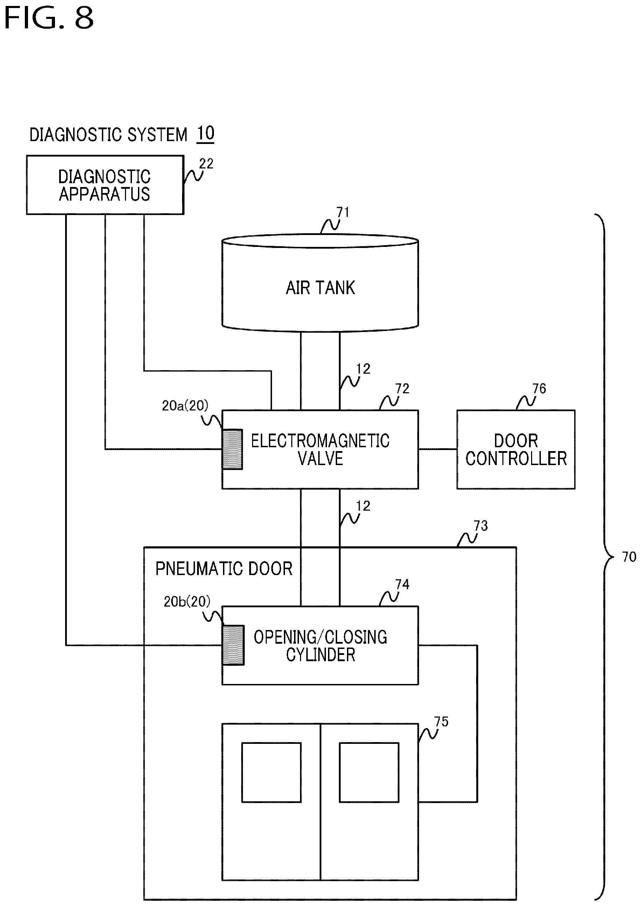

Fig. 8 shows a configuration of the diagnostic system 10 of the fourth exemplary embodiment. The diagnostic system 10 of the fourth exemplary embodiment diagnoses the state of a pneumatic door system 70 related to opening/closing of the door of a railway vehicle. The pneumatic door system 70 includes a pipe 12, an air tank 71, an electromagnetic valve 72, a pneumatic door 73, and a door controller 76. The pneumatic door 73 includes an opening/closing cylinder 74 and a door leaf 75.

The air tank 71 is filled with a compressed air and outputs the compressed air. The electromagnetic valve 72 is a valve installed on the upstream side of the pipe 12 as a power transmission path and regulating the flow rate of the compressed air flowing in the pipe 12. The opening/closing cylinder 74 is an actuator that operates by using the pressure of the compressed air transmitted from the electromagnetic valve 72 via the pipe 12 as the driving source. The opening/closing cylinder 74 opens or closes the door leaf 75. The door controller 76 controls the operation of the opening/closing cylinder 74 by controlling opening/closing of the electromagnetic valve 72 and regulating the flow rate of the compressed air flowing in the pipe 12. Thereby, the door controller 76 controls opening and closing of the pneumatic door 73 (door leaf 75).

The first sensor apparatus 20a is installed on the upstream side of the pipe 12 and is installed in the electromagnetic valve 72 in the fourth exemplary embodiment. The second sensor apparatus 20b is installed on the downstream side of the pipe 12 and is installed in the opening/closing cylinder 74 of the pneumatic door 73 in the fourth exemplary embodiment.

The diagnostic apparatus 22 communicates with the first sensor apparatus 20a, the second sensor apparatus 20b, and the electromagnetic valve 72. The diagnostic apparatus 22 of the fourth exemplary embodiment may include functional blocks provided in the diagnostic apparatus 22 of the exemplary embodiments or variations described above. For example, the diagnostic apparatus 22 of the fourth exemplary embodiment may include functional blocks of the diagnostic apparatus 22 of the first exemplary embodiment shown in Fig. 3.

The state estimation unit 52 of the diagnostic apparatus 22 estimates the state of the pipe 12 between the electromagnetic valve 72 and the pneumatic door 73 (opening/closing cylinder 74) based on the detection result of the first sensor apparatus 20a and the detection result of the second sensor apparatus 20b. The estimation method and the estimated content discussed in the exemplary embodiments or variations described above may be applied to the method of estimation and the content estimated by the state estimation unit 52. The diagnostic system 10 of the fourth exemplary embodiment provides the benefit corresponding to that of the diagnostic system 10 of the exemplary embodiments described above. For example, diagnostic system 10 of the fourth exemplary embodiment can diagnose the state of the power transmission path in the pneumatic door system 70 efficiently.

### <Fifth exemplary embodiment>

The fifth exemplary embodiment of the present invention will be described mainly highlighting differences from the exemplary embodiments described above, and a description of common features will be omitted as appropriate. The features of the fifth exemplary embodiment can of course be combined with features of the exemplary embodiments and variations described above as desired. Of the components of the fifth exemplary embodiment, those components that are the same as or correspond to the components of the exemplary embodiments described above will be described by denoting them with the same reference numerals as appropriate.

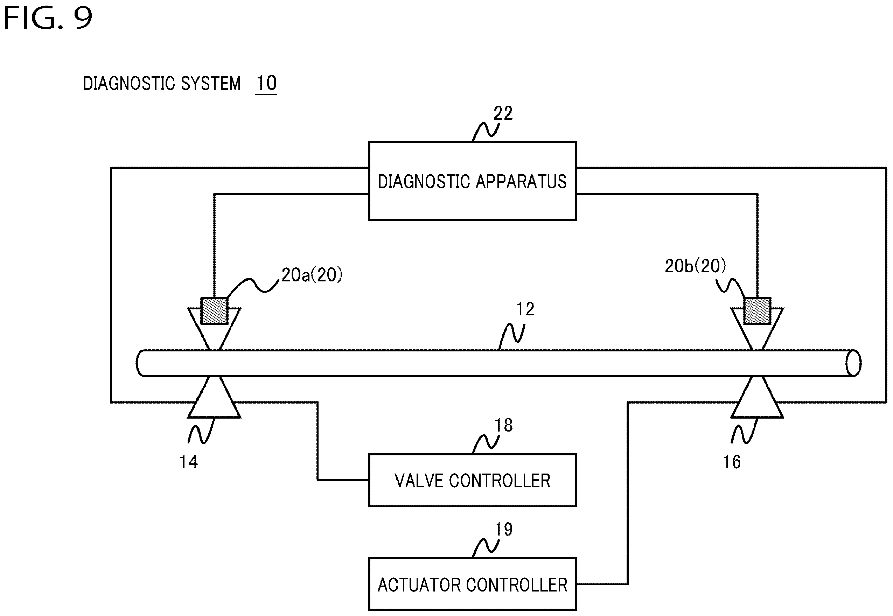

Fig. 9 shows a configuration of the diagnostic system 10 of the fifth exemplary embodiment. The power transmission system to be diagnosed by the diagnostic system 10 of the fifth exemplary embodiment includes a pipe 12 as a power transmission path, a valve 14, an actuator 16, a valve controller 18, and an actuator controller 19.

In the fifth exemplary embodiment, a hydraulic oil flows in the pipe 12. The actuator 16 is a hydraulic actuator driven by the pressure of the hydraulic oil transmitted from the valve 14 via the pipe 12. The actuator controller 19 is an apparatus that controls the operation of the actuator 16 and transmits a control signal for starting or terminating the operation of the actuator 16 (hereinafter also referred to as "actuator operation command") to the actuator 16.

In the diagnostic system 10 of the fifth exemplary embodiment, the first sensor apparatus 20a is installed in the valve 14 provided on the upstream side of the power transmission path (pipe 12). The second sensor apparatus 20b is installed in the actuator 16 provided on the downstream side of the power transmission path.

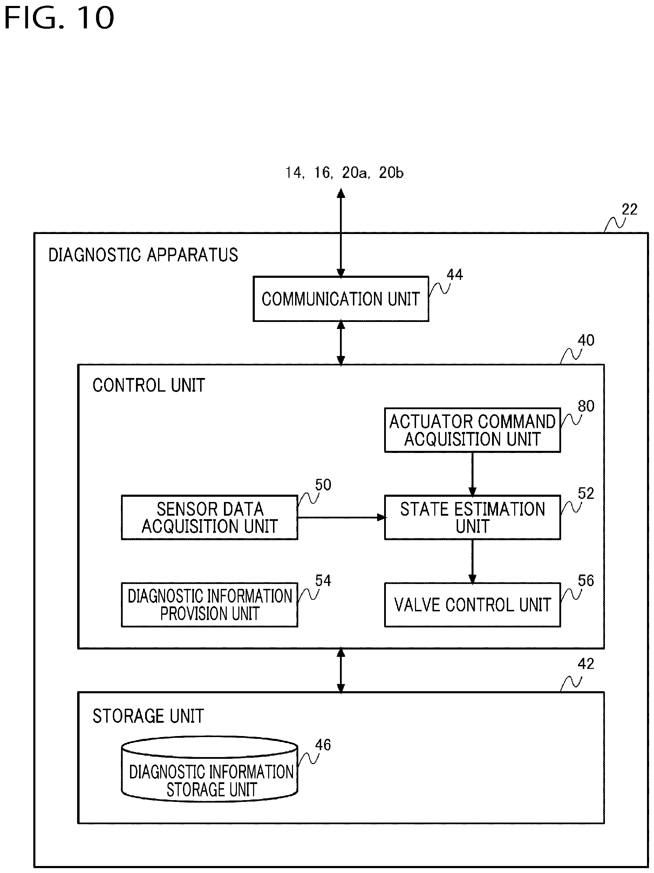

Fig. 10 is a block diagram illustrating functional blocks of the diagnostic apparatus 22 of the fifth exemplary embodiment. The state estimation unit 52 of the diagnostic apparatus 22 estimates the state of the pipe 12 between the valve 14 and the actuator 16 based on the detection result of the first sensor apparatus 20a and the detection result of the second sensor apparatus 20b. The estimation method and the estimated content discussed in the exemplary embodiments or variations described above may be applied to the method of estimation and the content estimated by the state estimation unit 52.

Further, the diagnostic apparatus 22 of the fifth exemplary embodiment further includes an actuator command acquisition unit 80 in addition to the functional block of the diagnostic apparatus 22 of the first exemplary embodiment. The actuator command acquisition unit 80 acquires, from the actuator 16, an actuator operation command transmitted from the actuator controller 19 to the actuator 16. In one variation, the actuator command acquisition unit 80 may acquire, from the actuator controller 19, an actuator operation command transmitted from the actuator controller 19 to the actuator 16 or may acquire the command from a relay apparatus (not shown) that relays communication between the actuator controller 19 and the actuator 16.

The state estimation unit 52 estimates the state of the power transmission path between the first sensor apparatus 20a and the second sensor apparatus 20b based on the detection result of the first sensor apparatus 20a and the detection result of the second sensor apparatus 20b in response to the acquisition of the actuator operation command by the actuator command acquisition unit 80, in other words, when the actuator operation command is acquired. In the fifth exemplary embodiment, the state estimation unit 52 estimates the state of the pipe 12 between the valve 14 and the actuator 16.

According to the diagnostic system 10 of the fifth exemplary embodiment, the state of the pipe 12 is diagnosed at a point of time when the actuator operation command is transmitted from the actuator controller 19 to the actuator 16. This makes it possible to detect an abnormality in the pipe 12 as the power transmission path accurately. The configuration of the fifth exemplary embodiment for diagnosing the state of the power transmission path in response to the acquisition of the actuator operation command can be arbitrarily combined with other exemplary embodiments or variations.

### <Sixth exemplary embodiment>

The sixth exemplary embodiment of the present invention will be described mainly highlighting differences from the exemplary embodiments described above, and a description of common features will be omitted as appropriate. The features of the sixth exemplary embodiment can of course be combined with features of the exemplary embodiments and variations described above as desired. Of the components of the sixth exemplary embodiment, those components that are the same as or correspond to the components of the exemplary embodiments described above will be described by denoting them with the same reference numerals as appropriate.

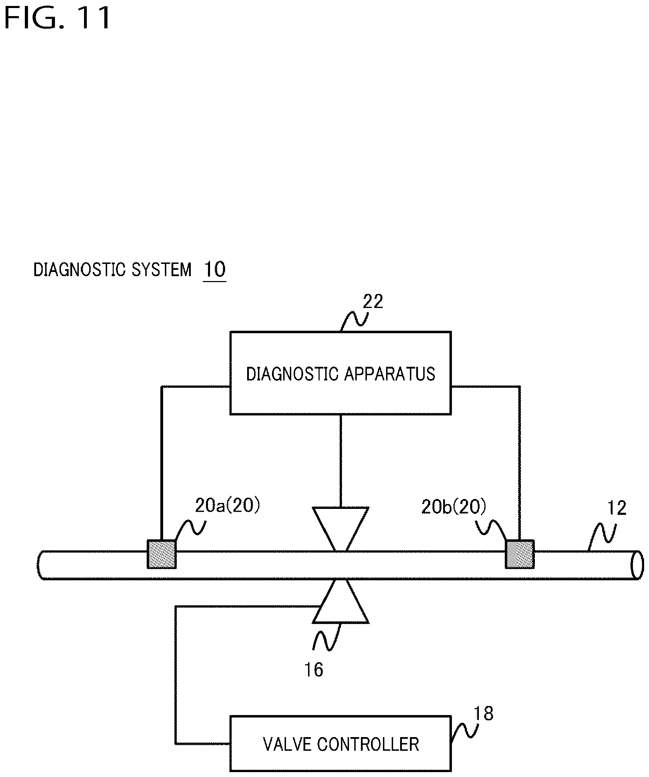

Fig. 11 shows a configuration of the diagnostic system 10 of the sixth exemplary embodiment. The power transmission system to be diagnosed by the diagnostic system 10 of the sixth exemplary embodiment includes a pipe 12 as a power transmission path, an actuator 16, and a valve controller 18. The actuator 16 operates on a power transmitted by the pipe 12. When the fluid flowing in the pipe 12 is a hydraulic oil, the actuator 16 may be a hydraulic actuator driven by the pressure of the hydraulic oil.

The first sensor apparatus 20a is installed upstream of the actuator 16 in the power transmission path. The second sensor apparatus 20b is installed downstream of the actuator 16 in the power transmission path. In the example of Fig. 11, the first sensor apparatus 20a and the second sensor apparatus 20b are installed on the pipe 12 and are installed at positions sandwiching the actuator 16.

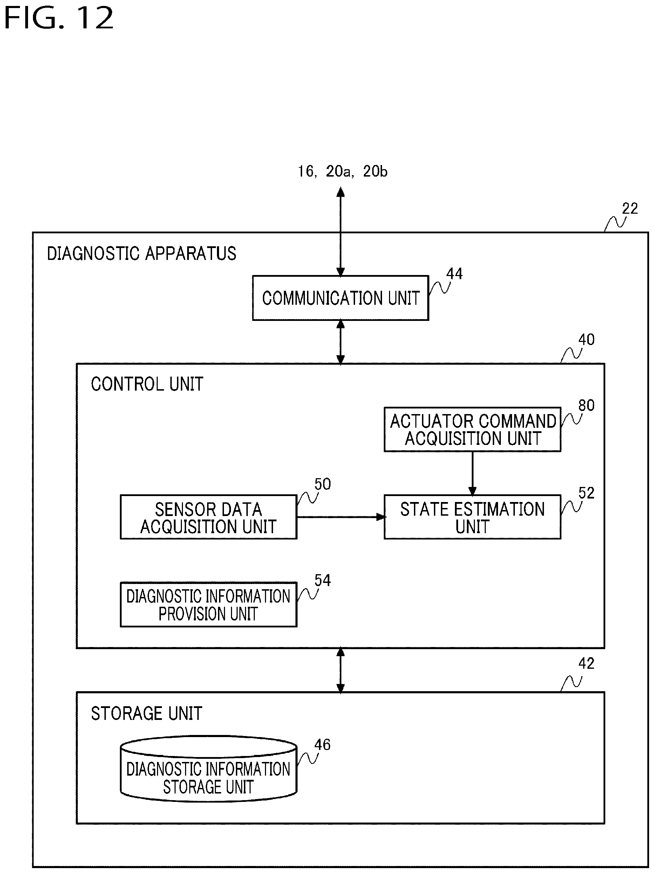

Fig. 12 is a block diagram showing functional blocks of the diagnostic apparatus 22 of the sixth exemplary embodiment. The diagnostic apparatus 22 of the sixth exemplary embodiment includes functional blocks of the diagnostic apparatus 22 of the fifth exemplary embodiment shown in Fig. 10 but does not include the valve control unit 56. The state estimation unit 52 of the diagnostic apparatus 22 estimates whether there is an abnormality in the actuator 16 based on the detection result of the first sensor apparatus 20a and the detection result of the second sensor apparatus 20b.

For example, the detection unit 30 of the first sensor apparatus 20a and the detection unit 30 of the second sensor apparatus 20b may both detect the temperature of the pipe 12 as the power transmission path. The diagnostic apparatus 22 may estimate that the actuator 16 is abnormal when the temperature indicated by the detection result of the first sensor apparatus 20a is higher than the temperature indicated by the detection result of the second sensor apparatus 20b. Alternatively, both the detection unit 30 of the first sensor apparatus 20a and the detection unit 30 of the second sensor apparatus 20b may detect the pressure of the fluid flowing in the pipe 12. The diagnostic apparatus 22 may estimate that the actuator 16 is abnormal when the pressure value indicated by the detection result of the first sensor apparatus 20a is higher than the pressure value indicated by the detection result of the second sensor apparatus 20b. This is suitable in the case the actuator 16 in a normal operation operates to increase the temperature on the downstream side of the power transmission path or in the case it operates to increase the pressure on the downstream side of the power transmission path.

According to the diagnostic system 10 of the sixth exemplary embodiment, the state of an actuator installed on the power transmission path and not provided with a sensor can be diagnosed.

### <Seventh exemplary embodiment>

The seventh exemplary embodiment of the present invention will be described mainly highlighting differences from the exemplary embodiments described above, and a description of common features will be omitted as appropriate. The features of the seventh exemplary embodiment can of course be combined with features of the exemplary embodiments and variations described above as desired. Of the components of the seventh exemplary embodiment, those components that are the same as or correspond to the components of the exemplary embodiments described above will be described by denoting them with the same reference numerals as appropriate.

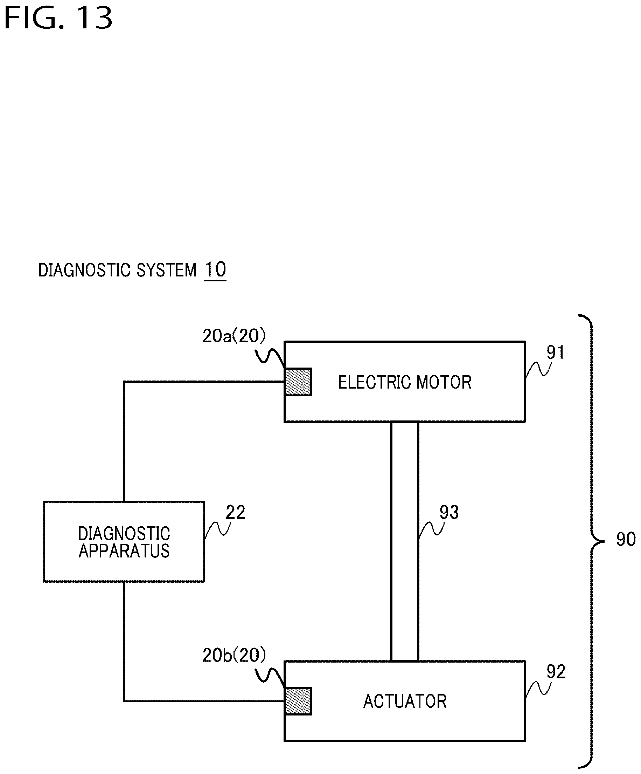

Fig. 13 shows a configuration of the diagnostic system 10 of the seventh exemplary embodiment. The diagnostic system 10 of the seventh exemplary embodiment diagnoses the state of a power transmission path 90. An electric motor 91, an actuator 92, and a transmission mechanism 93 are installed in the power transmission path 90. The electric motor 91 is an equipment installed on the upstream side of the power transmission path 90 and converting electrical energy into mechanical energy such as rotational motion. The actuator 92 is a mechanical element installed on the downstream side of the power transmission path 90 and driven by a power output from the electric motor 91. The transmission mechanism 93 is a mechanical element that transmits the power output from the electric motor 91 to the actuator 92. The transmission mechanism 93 may include, for example, a gear.

The first sensor apparatus 20a is installed in the electric motor 91. The second sensor apparatus 20b is installed in the actuator 92. The diagnostic apparatus 22 of the seventh exemplary embodiment may include functional blocks provided in the diagnostic apparatus 22 of the exemplary embodiments or variations described above. Of the functional blocks of the diagnostic apparatus 22 of the second exemplary embodiment shown in Fig. 5, for example, the diagnostic apparatus 22 of the seventh exemplary embodiment may include the diagnostic information storage unit 46, the normal value storage unit 48, the sensor data acquisition unit 50, the state estimation unit 52, and the diagnostic information provision unit 54.

The state estimation unit 52 of the diagnostic apparatus 22 estimates the state of the transmission mechanism 93 between the electric motor 91 and the actuator 92 based on the detection result of the first sensor apparatus 20a and the detection result of the second sensor apparatus 20b. The diagnostic system 10 of the seventh exemplary embodiment can diagnose the state of the transmission mechanism 93 where a sensor is not installed.

For example, the normal value storage unit 48 of the diagnostic apparatus 22 may store, as normal values, a set that associates with each other the detection result (for example, vibration value) of the first sensor apparatus 20a and the detection result (for example, vibration value) of the second sensor apparatus 20b occurring when the state of the transmission mechanism 93 is normal. The state estimation unit 52 of the diagnostic apparatus 22 may compare the normal value of the detection result of the second sensor apparatus 20b corresponding to the detection result transmitted from the first sensor apparatus 20a with the detection result transmitted from the second sensor apparatus 20b (that is, the current measurement result) and determine that the transmission mechanism 93 is abnormal when the difference is equal to or greater than a predetermined threshold value. An appropriate threshold value may be determined by the knowledge of the developer of the diagnostic system 10 or experiments using the diagnostic system 10 (e.g., experiments using the normal transmission mechanism 93 and the abnormal transmission mechanism 93, respectively).

### <Eighth exemplary embodiment>

The eighth exemplary embodiment of the present invention will be described mainly highlighting differences from the exemplary embodiments described above, and a description of common features will be omitted as appropriate. The features of the eighth exemplary embodiment can of course be combined with features of the exemplary embodiments and variations described above as desired. Of the components of the eighth exemplary embodiment, those components that are the same as or correspond to the components of the exemplary embodiments described above will be described by denoting them with the same reference numerals as appropriate.

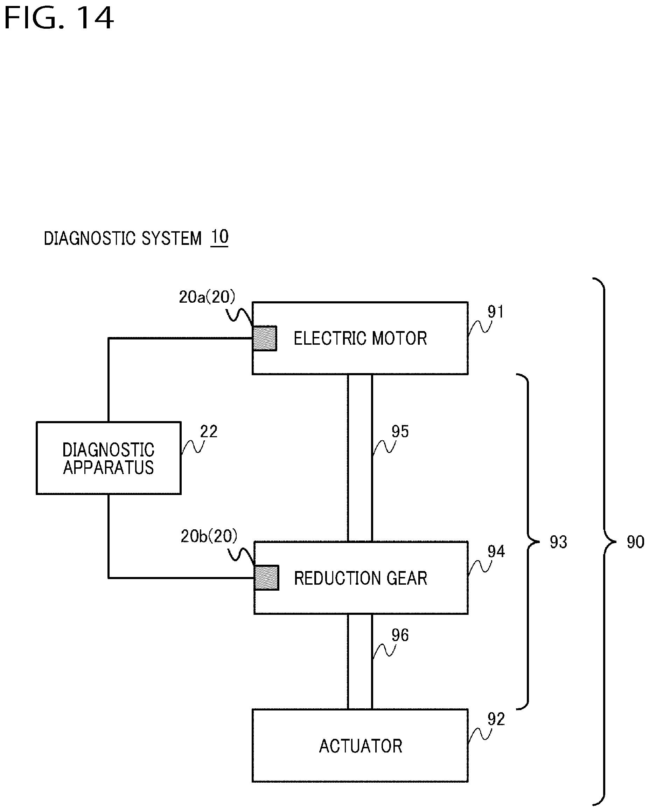

Fig. 14 shows a configuration of the diagnostic system 10 of the eighth exemplary embodiment. The diagnostic system 10 of the eighth exemplary embodiment diagnoses the state of the power transmission path 90 corresponding to the power transmission path 90 of the seventh exemplary embodiment. The power transmission path 90 of the eighth exemplary embodiment is a power transmission path provided in a robot arm. An electric motor 91, an actuator 92, a reduction gear 94, a first transmission mechanism 95, and a second transmission mechanism 96 are installed in the power transmission path 90. The set of the reduction gear 94, the first transmission mechanism 95, and the second transmission mechanism 96 corresponds to the transmission mechanism 93 of the seventh exemplary embodiment.

The actuator 92 is an arm driven based on a power output from the reduction gear 94. The first transmission mechanism 95 is a mechanism that transmits the power output from the electric motor 91 to the reduction gear 94. The first transmission mechanism 95 may be a gear (for example, a bevel gear). The reduction gear 94 is an apparatus that reduces the rotational speed of the power input via the first transmission mechanism 95 and outputs the resultant power. The second transmission mechanism 96 is a mechanism for transmitting the power output from the reduction gear 94 to the actuator 92.

The first sensor apparatus 20a is installed in the electric motor 91. The second sensor apparatus 20b is installed in the reduction gear 94. The diagnostic apparatus 22 of the eighth exemplary embodiment may include functional blocks provided in the diagnostic apparatus 22 of the exemplary embodiments or variations described above. Of the functional blocks of the diagnostic apparatus 22 of the second exemplary embodiment shown in Fig. 5, for example, the diagnostic apparatus 22 of the eighth exemplary embodiment may include the diagnostic information storage unit 46, the normal value storage unit 48, the sensor data acquisition unit 50, the state estimation unit 52, and the diagnostic information provision unit 54.

The state estimation unit 52 of the diagnostic apparatus 22 estimates the state of the first transmission mechanism 95 between the electric motor 91 and the reduction gear 94 based on the detection result of the first sensor apparatus 20a and the detection result of the second sensor apparatus 20b. The diagnostic system 10 of the eighth exemplary embodiment can diagnose the state of a transmission mechanism that transmits a power in a robot arm and, in particular, the state of the first transmission mechanism 95 (e.g., gear) where a sensor is not installed.

For example, the normal value storage unit 48 of the diagnostic apparatus 22 may store, as normal values, a set that associates with each other the detection result (for example, vibration value) of the first sensor apparatus 20a and the detection result (for example, vibration value) of the second sensor apparatus 20b occurring when the state of the first transmission mechanism 95 is normal. The state estimation unit 52 of the diagnostic apparatus 22 may compare the normal value of the detection result of the second sensor apparatus 20b corresponding to the detection result transmitted from the first sensor apparatus 20a with the detection result transmitted from the second sensor apparatus 20b (that is, the current measurement result) and determine that the first transmission mechanism 95 is abnormal when the difference is equal to or greater than a predetermined threshold value. An appropriate threshold value may be determined by the knowledge of the developer of the diagnostic system 10 or experiments using the diagnostic system 10 (e.g., experiments using the normal first transmission mechanism 95 and the abnormal first transmission mechanism 95, respectively).

### <Ninth embodiment>

The ninth exemplary embodiment of the present invention will be described mainly highlighting differences from the exemplary embodiments described above, and a description of common features will be omitted as appropriate. The features of the ninth exemplary embodiment can of course be combined with features of the exemplary embodiments and variations described above as desired. Of the components of the ninth exemplary embodiment, those components that are the same as or correspond to the components of the exemplary embodiments described above will be described by denoting them with the same reference numerals as appropriate.

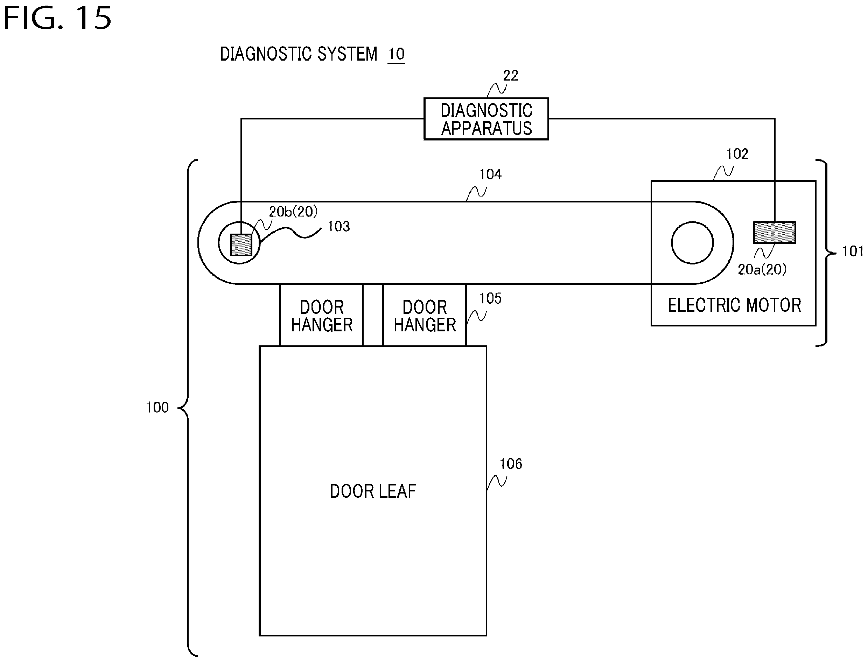

Fig. 15 shows a configuration of the diagnostic system 10 of the ninth exemplary embodiment. The diagnostic system 10 of the ninth exemplary embodiment diagnoses the state of a power transmission path 101 in an automatic door 100. An electric motor 102, a driven pulley 103, and a timing belt 104 are installed in the power transmission path 101. The driven pulley 103 is a pulley attached to a driven shaft that consumes power in belt transmission. The timing belt 104 is a belt that transmits a power output from the electric motor 102 to the driven pulley 103. A door leaf 106 is attached to the timing belt 104 via a door hanger 105, and the door leaf 106 opens or closes as the electric motor 102 drives the timing belt 104.

The first sensor apparatus 20a is installed in the electric motor 102. The second sensor apparatus 20b is installed in the driven pulley 103. The diagnostic apparatus 22 of the ninth exemplary embodiment may include functional blocks provided in the diagnostic apparatus 22 of the exemplary embodiments or variations described above. Of the functional blocks of the diagnostic apparatus 22 of the second exemplary embodiment shown in Fig. 5, for example, the diagnostic apparatus 22 of the ninth exemplary embodiment may include the diagnostic information storage unit 46, the normal value storage unit 48, the sensor data acquisition unit 50, the state estimation unit 52, and the diagnostic information provision unit 54.

The state estimation unit 52 of the diagnostic apparatus 22 estimates the state of the timing belt 104 between the electric motor 102 and the driven pulley 103. The diagnostic system 10 of the ninth exemplary embodiment can diagnose the state of a transmission mechanism that transmits a power in an automatic door and, in particular, the state of the timing belt 104 (e.g., whether it is deformed) where a sensor is not installed.

For example, the normal value storage unit 48 of the diagnostic apparatus 22 may store, as normal values, a set that associates with each other the detection result (for example, vibration value) of the first sensor apparatus 20a and the detection result (for example, vibration value) of the second sensor apparatus 20b occurring when the state of the timing belt 104 is normal. The state estimation unit 52 of the diagnostic apparatus 22 may compare the normal value of the detection result of the second sensor apparatus 20b corresponding to the detection result transmitted from the first sensor apparatus 20a with the detection result transmitted from the second sensor apparatus 20b (that is, the current measurement result) and determine that the timing belt 104 is abnormal when the difference is equal to or greater than a predetermined threshold value. An appropriate threshold value may be determined by the knowledge of the developer of the diagnostic system 10 or experiments using the diagnostic system 10 (e.g., experiments using the normal timing belt 104 and the abnormal timing belt 104, respectively).

Described above is an explanation based on first to ninth exemplary embodiments. The exemplary embodiments are intended to be illustrative only and it will be understood by those skilled in the art that various modifications to combinations of constituting elements and processes described in the exemplary embodiments are possible and that such modifications are also within the scope of the present invention.

The sensor apparatus 20 of the exemplary embodiments described above is assumed to be a sensor apparatus as a nameplate. In one variation, the sensor apparatus 20 may not be a nameplate and may be a sheet-type or coin-type sensor apparatus that can be easily attached to an object.

Of the exemplary embodiments disclosed in this specification, those in which a plurality of functions are provided in a distributed manner may be provided by aggregating some or all of the plurality of functions. Conversely, a plurality of functions provided in an aggregated manner may be provided by distributing some of all of the plurality of functions. Regardless of whether the functions are aggregated or distributed, they may be configured so as to achieve the object of the invention.

Any combination of the exemplary embodiment and the variation described above will also be useful as an embodiment of the present invention. New embodiments created by the combination provide the advantages of exemplary embodiment and the variation combined. It will also be understood by skilled persons that the functions that the constituting elements recited in the claims should achieve are implemented either alone or in combination by the constituting elements shown in the exemplary embodiment and the variations.

The technologies according to the exemplary embodiments and variations may be defined by the following items.
[Item 1] A diagnostic system including: a sensor data acquisition unit that acquires a detection result of a first sensor installed on the upstream side of a power transmission path and a detection result of a second sensor installed on the downstream side of the power transmission path; and an estimation unit that estimates a state of the power transmission path between the first sensor and the second sensor based on the detection result of the first sensor and the detection result of the second sensor.

According to this diagnostic system, it is possible to estimate the state of a location in the power transmission path where a sensor is not installed and efficiently diagnose the state of the power transmission path.
[Item 2] The diagnostic system according to item 1, wherein each of the first sensor and the second sensor is a sensor that detect at least one of a vibration at a position of sensor installation or a temperature at the position of sensor installation.

According to this diagnostic system, it is possible to estimate the state of a location in the power transmission path where a sensor is not installed and efficiently diagnose the state of the power transmission path based on the vibration or the temperature at the position of sensor installation in the power transmission path.
[Item 3] The diagnostic system according to item 1 or 2, wherein the power transmission path is a pipe through which a fluid controlled by a valve flows, and the estimation unit estimates a state of the pipe based on the detection result of the first sensor and the detection result of the second sensor.

According to this diagnostic system, it is possible to estimate the state of a location in the pipe as the power transmission path where a sensor is not installed and efficiently diagnose the state of the power transmission path.
[Item 4] The diagnostic system according to item 3, wherein each of the first sensor and the second sensor is a sensor that detects at least one of a velocity of the fluid flowing in the pipe at a position of sensor installation or a pressure of the fluid flowing in the pipe at a position of sensor installation.

According to this diagnostic system, it is possible to estimate, based on the velocity or the pressure of the fluid in the pipe at the position of sensor installation, the state of a location in the pipe where a sensor is not installed and efficiently diagnose the state of the pipe as the power transmission path.
[Item 5] The diagnostic system according to item 4, wherein the first sensor and the second sensor are sensors for detecting a velocity of the fluid flowing in the pipe, and the estimation unit estimates a state in the pipe by comparing the velocity of the fluid at a location of installation of the first sensor obtained from the detection result of the first sensor with the velocity of the fluid at a location of installation of the second sensor obtained from the detection result of the second sensor.

According to this diagnostic system, it is possible to estimate, based on the velocity difference of the fluid in the pipe at the position of sensor installation, the state of a location in the pipe where a sensor is not installed and efficiently diagnose the state of the pipe as the power transmission path.
[Item 6] The diagnostic system according to item 5, wherein the first sensor and the second sensor are sensors that irradiate the fluid in the pipe with ultrasonic waves or radio waves and acquire reflection by the fluid.

According to this diagnostic system, it is possible to estimate, based on the velocity difference of the fluid in the pipe at the position of sensor installation, the state of a location in the pipe where a sensor is not installed and efficiently diagnose the state of the pipe as the power transmission path.
[Item 7] The diagnostic system according to any one of items 3 to 6, wherein when a vibration at a location of installation of the second sensor, a velocity of the fluid, or a pressure of the fluid obtained from the detection result of the second sensor is smaller than a vibration at a location of installation of the first sensor, a velocity of the fluid, or a pressure of the fluid obtained from the detection result of the first sensor, the estimation unit estimates that there is a clog or a leak in the pipe between the first sensor and the second sensor.

According to this diagnostic system, a clog or a leak in the pipe as the power transmission path can be detected accurately.
[Item 8] The diagnostic system according to item 7, further including: a valve control unit that controls the valve for controlling the fluid flowing in the pipe to a more open position, when it is estimated by the estimation unit that there is a clog or a leak in the pipe.

According to this diagnostic system, a clog in the pipe as the power transmission path can be eliminated and an impact from a leak in the pipe can be reduced.
[Item 9] The diagnostic system according to any one of items 3 to 8, wherein the first sensor is installed in the valve, the diagnostic system further including a storage unit that stores a normal value of the detection result of the second sensor occurring when the valve is in an open state or a closed state, wherein the estimation unit estimates whether or not the valve is in an open state or a closed state based on the detection result of the first sensor, and, when the valve is estimated to be in an open state or a closed state, the estimation unit estimates the state of the pipe between the first sensor and the second sensor by comparing a value of the detection result of the second sensor with the normal value stored in the storage unit.

According to this diagnostic system, the state of a location in the power transmission path where a sensor is not installed can be estimated efficiently.
[Item 10] The diagnostic system according to any one of items 3 to 8, further including: a valve command acquisition unit that acquires a valve operation command for opening or closing the valve, wherein the first sensor is installed in the valve, and the estimation unit estimates the state of the pipe between the first sensor and the second sensor based on the detection result of the first sensor and the detection result of the second sensor in response to acquisition of the valve operation command.

According to this diagnostic system, an abnormal state of the pipe between the first sensor and the second sensor can be detected efficiently in response to acquisition of a valve operation command.
[Item 11] The diagnostic system according to any one of items 3 to 10, wherein the fluid is a compressed air, the first sensor is installed in the valve, the second sensor is installed in an air brake cylinder that brakes wheels of a railway vehicle using a pressure of the compressed air transmitted from the valve via the pipe as a drive source, and the estimation unit estimates the state of the pipe between the valve and the air brake cylinder.

According to this diagnostic system, the state of the power transmission path in the brake system of a railway vehicle can be diagnosed efficiently.
[Item 12] The diagnostic system according to any one of items 3 to 10, wherein the fluid is a compressed air, the first sensor is installed in the valve, the second sensor is installed in a pneumatic door for opening or closing a door of a railway vehicle using a pressure of the compressed air transmitted from the valve via the pipe as a drive source, and the estimation unit estimates the state of the pipe between the valve and the pneumatic door.

According to this diagnostic system, the state of the power transmission path in the door system of a railway vehicle can be diagnosed efficiently.
[Item 13] The diagnostic system according to any one of items 3 to 10, wherein the fluid is a hydraulic oil, the first sensor is installed in the valve, the second sensor is installed in a hydraulic actuator driven by a pressure of the hydraulic fluid transmitted from the valve via the pipe, and the estimation unit estimates the state of the pipe between the valve and the hydraulic actuator.

According to this diagnostic system, the state of the power transmission path in a hydraulic drive system can be diagnosed efficiently.
[Item 14] The diagnostic system according to any one of items 1 to 13. wherein the second sensor is installed in an actuator that operates on a power transmitted by the power transmission path, the diagnostic system further including an actuator command acquisition unit that acquires an actuator operation command for starting and controlling an operation of the actuator, wherein the estimation unit estimates the state of the power transmission path in response to acquisition of the actuator operation command.

According to this diagnostic system, an abnormal state of the power transmission path between the first sensor and the second sensor can be detected efficiently.
[Item 15] The diagnostic system according to item 1, wherein the first sensor is installed upstream of an actuator that operates on a power transmitted by the power transmission path, the second sensor is installed downstream of the actuator that operates on the power transmitted by the power transmission path, and the estimation unit estimates an abnormality of the actuator based on the detection result of the first sensor and the detection result of the second sensor.

According to this diagnostic system, the state of an actuator installed on the power transmission path and not provided with a sensor can be diagnosed.
[Item 16] The diagnostic system according to item 15, wherein the first sensor and the second sensor are sensors that detect a temperature of the power transmission path, and the estimation unit estimates that the actuator is abnormal when the temperature indicated by the detection result of the first sensor is higher than the temperature indicated by the detection result of the second sensor.

According to this diagnostic system, the state of an actuator not provided with a sensor can be diagnosed based on a temperature difference detected at a position of sensor installation.
[Item 17] The diagnostic system according to item 1 or 2, wherein an electric motor, an actuator driven by a power output from the electric motor, and a transmission mechanism that transmits the power output from the electric motor to the actuator are provided in the power transmission path, the first sensor is provided in the electric motor, the second sensor is provided in the actuator, and the estimation unit estimates a state of the transmission mechanism.

According to this diagnostic system, the state of a transmission mechanism not provided with a sensor can be diagnosed.
[Item 18] The diagnostic system according to item 1 or 2, wherein an electric motor, a gear that transmits a power output from the electric motor, and a reduction gear that reduces a rotational speed of the power input via the gear and outputs a resultant power are provided in the power transmission path, the first sensor is installed in the electric motor, the second sensor is installed in the reduction gear, and the estimation unit estimates a state of the gear.

According to this diagnostic system, the state of a gear not provided with a sensor can be diagnosed.
[Item 19] The diagnostic system according to item 1, wherein the first sensor and the second sensor are sensors that detect a vibration at a position of sensor installation, and, when a difference between the vibration at a position of installation of the first sensor obtained from the detection result of the first sensor and the vibration at a position of installation of the second sensor obtained from the detection result of the second sensor is within a predetermined range, the estimation unit estimates that vibration is occurring in the entirety of the power transmission path and that the power transmission path is normal.

According to this diagnostic system, false detection of an abnormality in the power transmission path can be avoided, in other words, the estimation accuracy of the state of the power transmission path can be improved.
[Item 20] The diagnostic system according to item 1 or 2, wherein the power transmission path is a power transmission path in an automatic door, an electric motor, a driven pulley, and a belt that transmits a power output from the electric motor to the driven pulley are provided in the power transmission path, the first sensor is installed in the electric motor, the second sensor is installed in the driven pulley, and the estimation unit estimates a state of the belt.

According to this diagnostic system, the state of the belt that transmits a power in an automatic door can be estimated.
[Item 21] The diagnostic system according to item 1 or 2, wherein the power transmission path is a power transmission path in a robot arm, an electric motor, a reduction gear, and a transmission mechanism that transmits a power output from the electric motor to the reduction gear are provided in the power transmission path, the first sensor is installed in the electric motor, the second sensor is installed in the reduction gear, and the estimation unit estimates a state of the transmission mechanism.

According to this diagnostic system, the state of the transmission mechanism that transmits a power in a robot arm can be estimated.

### [INDUSTRIAL APPLICABILITY]

The technology of the present disclosure can be applied to diagnostic systems.

### [REFERENCE SIGNS LIST]

10 diagnostic system, 12 pipe, 14 valve, 16 actuator, 20a first sensor apparatus, 20b second sensor apparatus, 22 diagnostic apparatus, 46 diagnostic information storage unit, 48 normal value storage unit, 50 sensor data acquisition unit, 52 state estimation unit, 56 valve control unit, 58 valve command acquisition unit, 80 actuator command acquisition unit

## Claims

1. A diagnostic system comprising:
a sensor data acquisition unit that acquires a detection result of a first sensor installed on the upstream side of a power transmission path and a detection result of a second sensor installed on the downstream side of the power transmission path; and
an estimation unit that estimates a state of the power transmission path between the first sensor and the second sensor based on the detection result of the first sensor and the detection result of the second sensor.

2. The diagnostic system according to claim 1, wherein
each of the first sensor and the second sensor is a sensor that detect at least one of a vibration at a position of sensor installation or a temperature at the position of sensor installation.

3. The diagnostic system according to claim 1 or 2, wherein
the power transmission path is a pipe through which a fluid controlled by a valve flows, and
the estimation unit estimates a state of the pipe based on the detection result of the first sensor and the detection result of the second sensor.

4. The diagnostic system according to claim 3, wherein
each of the first sensor and the second sensor is a sensor that detects at least one of a velocity of the fluid flowing in the pipe at a position of sensor installation or a pressure of the fluid flowing in the pipe at a position of sensor installation.

5. The diagnostic system according to claim 4, wherein
the first sensor and the second sensor are sensors for detecting a velocity of the fluid flowing in the pipe, and
the estimation unit estimates a state in the pipe by comparing the velocity of the fluid at a location of installation of the first sensor obtained from the detection result of the first sensor with the velocity of the fluid at a location of installation of the second sensor obtained from the detection result of the second sensor.

6. The diagnostic system according to claim 5, wherein
the first sensor and the second sensor are sensors that irradiate the fluid in the pipe with ultrasonic waves or radio waves and acquire reflection by the fluid.

7. The diagnostic system according to any one of claims 3 to 6, wherein
when a vibration at a location of installation of the second sensor, a velocity of the fluid, or a pressure of the fluid obtained from the detection result of the second sensor is smaller than a vibration at a location of installation of the first sensor, a velocity of the fluid, or a pressure of the fluid obtained from the detection result of the first sensor, the estimation unit estimates that there is a clog or a leak in the pipe between the first sensor and the second sensor.

8. The diagnostic system according to claim 7, further comprising:
a valve control unit that controls the valve for controlling the fluid flowing in the pipe to a more open position, when it is estimated by the estimation unit that there is a clog or a leak in the pipe.

9. The diagnostic system according to any one of claims 3 to 8, wherein
the first sensor is installed in the valve,
the diagnostic system further comprising a storage unit that stores a normal value of the detection result of the second sensor occurring when the valve is in an open state or a closed state, wherein
the estimation unit estimates whether or not the valve is in an open state or a closed state based on the detection result of the first sensor, and, when the valve is estimated to be in an open state or a closed state, the estimation unit estimates the state of the pipe between the first sensor and the second sensor by comparing a value of the detection result of the second sensor with the normal value stored in the storage unit.

10. The diagnostic system according to any one of claims 3 to 8, further comprising:
a valve command acquisition unit that acquires a valve operation command for opening or closing the valve, wherein
the first sensor is installed in the valve, and
the estimation unit estimates the state of the pipe between the first sensor and the second sensor based on the detection result of the first sensor and the detection result of the second sensor in response to acquisition of the valve operation command.

11. The diagnostic system according to any one of claims 3 to 10, wherein
the fluid is a compressed air,
the first sensor is installed in the valve,
the second sensor is installed in an air brake cylinder that brakes wheels of a railway vehicle using a pressure of the compressed air transmitted from the valve via the pipe as a drive source, and
the estimation unit estimates the state of the pipe between the valve and the air brake cylinder.

12. The diagnostic system according to any one of claims 3 to 10, wherein
the fluid is a compressed air,
the first sensor is installed in the valve,
the second sensor is installed in a pneumatic door for opening or closing a door of a railway vehicle using a pressure of the compressed air transmitted from the valve via the pipe as a drive source, and
the estimation unit estimates the state of the pipe between the valve and the pneumatic door.

13. The diagnostic system according to any one of claims 3 to 10, wherein
the fluid is a hydraulic oil,
the first sensor is installed in the valve,
the second sensor is installed in a hydraulic actuator driven by a pressure of the hydraulic fluid transmitted from the valve via the pipe, and
the estimation unit estimates the state of the pipe between the valve and the hydraulic actuator.

14. The diagnostic system according to any one of claims 1 to 13. wherein
the second sensor is installed in an actuator that operates on a power transmitted by the power transmission path,
the diagnostic system further comprising an actuator command acquisition unit that acquires an actuator operation command for starting and controlling an operation of the actuator, wherein
the estimation unit estimates the state of the power transmission path in response to acquisition of the actuator operation command.

15. The diagnostic system according to claim 1, wherein
the first sensor is installed upstream of an actuator that operates on a power transmitted by the power transmission path,
the second sensor is installed downstream of the actuator that operates on the power transmitted by the power transmission path, and
the estimation unit estimates an abnormality of the actuator based on the detection result of the first sensor and the detection result of the second sensor.

16. The diagnostic system according to claim 15, wherein
the first sensor and the second sensor are sensors that detect a temperature of the power transmission path, and
the estimation unit estimates that the actuator is abnormal when the temperature indicated by the detection result of the first sensor is higher than the temperature indicated by the detection result of the second sensor.

17. The diagnostic system according to claim 1 or 2, wherein
an electric motor, an actuator driven by a power output from the electric motor, and a transmission mechanism that transmits the power output from the electric motor to the actuator are provided in the power transmission path,
the first sensor is provided in the electric motor,
the second sensor is provided in the actuator, and
the estimation unit estimates a state of the transmission mechanism.

18. The diagnostic system according to claim 1 or 2, wherein
an electric motor, a gear that transmits a power output from the electric motor, and a reduction gear that reduces a rotational speed of the power input via the gear and outputs a resultant power are provided in the power transmission path,
the first sensor is installed in the electric motor,
the second sensor is installed in the reduction gear, and
the estimation unit estimates a state of the gear.

19. The diagnostic system according to claim 1, wherein
the first sensor and the second sensor are sensors that detect a vibration at a position of sensor installation, and
when a difference between the vibration at a position of installation of the first sensor obtained from the detection result of the first sensor and the vibration at a position of installation of the second sensor obtained from the detection result of the second sensor is within a predetermined range, the estimation unit estimates that vibration is occurring in the entirety of the power transmission path and that the power transmission path is normal.

20. The diagnostic system according to claim 1 or 2, wherein
the power transmission path is a power transmission path in an automatic door,
an electric motor, a driven pulley, and a belt that transmits a power output from the electric motor to the driven pulley are provided in the power transmission path,
the first sensor is installed in the electric motor,
the second sensor is installed in the driven pulley, and
the estimation unit estimates a state of the belt.

21. The diagnostic system according to claim 1 or 2, wherein
the power transmission path is a power transmission path in a robot arm,
an electric motor, a reduction gear, and a transmission mechanism that transmits a power output from the electric motor to the reduction gear are provided in the power transmission path,
the first sensor is installed in the electric motor,
the second sensor is installed in the reduction gear, and
the estimation unit estimates a state of the transmission mechanism.
